# EUROPÄISCHE PATENTSCHRIFT

(11) **EP 0 542 980 B1**
(45) Veröffentlichungstag und Bekanntmachung des Hinweises auf die Patenterteilung: **20.03.1996**
(21) Anmeldenummer: 92912731.4
(22) Anmeldetag: 10.06.1992
(51) Int. Cl.: B01D 19/04

(54) **BIOLOGISCH LEICHT ELIMINIERBARE ENTSCHÄUMER FÜR WÄSSRIGE SYSTEME**
READILY BIODEGRADABLE ANTI-FOAMING AGENT FOR AQUEOUS SYSTEMS
AGENT ANTIMOUSSE FACILEMENT BIODEGRADABLE POUR SYSTEMES AQUEUX

(30) Priorität: 10.06.1991 DE 4119116
(43) Veröffentlichungstag der Anmeldung: 26.05.1993
(73) Patentinhaber: DR. TH. BÖHME KG CHEM. FABRIK GMBH & CO., D-82538 Geretsried (DE)
(72) Erfinder: KLEIN, Reinhard, D-8113 Kochel am See (DE); JUNG, Karl-Heinz, D-8021 Icking (DE)
(74) Vertreter: Fehners, Klaus Friedrich
(86) Internationale Anmeldenummer: EP9201299
(87) Internationale Veröffentlichungsnummer: WO9222369

(56) Entgegenhaltungen:
- EP-A- 0 040 882
- EP-A- 0 384 292
- WO-A-79/00152
- GB-A- 1 603 047

## Beschreibung

### Beschreibung und Stand der Technik

Das bei den verschiedensten Fertigungsprozessen nachteilige Schaumverhalten wässriger Systeme wird mit Antischaummitteln korrigiert. Eine Vielzahl von Möglichkeiten zur Verhinderung oder Verminderung von Schaum ist bereits bekannt (Römpps Chemie-Lexikon, 7. Aufl. 1975, 5, S. 3083; Ullmanns Encyklopädie der technischen Chemie 3. Aufl. 1955, 5, S. 514). Als wirksame Substanzen haben sich Silikonöle, langkettige Fettalkohole, Amidwachse, Paraffine, Mineralöle, Aluminium- und Magnesiumseifen, sowie stark verzweigte organische und anorganische Ester bewährt. Diese Substanzklassen sind allerdings nicht generell anwendbar. Die verschiedenen Schaumverursacher erfordern unterschiedliche Substanzen zur Schaumbekämpfung.

In die Überlegungen zur Auswahl einer Entschäumerklasse werden mitunter auch Fragen nach Verträglichkeiten bei nachfolgenden Behandlungsschnitten miteinbezogen, was die Möglichkeiten an brauchbaren Entschäumertypen oft drastisch einschränkt.

Für die Bewältigung der Schaumprobleme in der Textilindustrie (speziell bei der Vorbehandlung, in der Bleiche und beim Färben) sowie in der Zellstoff- und Papierindustrie (speziell beim Zellstoffaufschluß, bei der Blattbildung und den jeweiligen Abwässern) haben sich Entschäumer auf Mineralölbasis prinzipiell bewährt.
Aufgrund des gesteigerten Umweltbewußtseins ist man jedoch in weiten Bereichen der oben erwähnten Industrie gezwungen, diese zwar wirksamen, aber biologisch schlecht eliminierbaren Entschäumer durch andere biologisch gut abbaubare Entschäumertypen zu ersetzen.

Die Wirkung der bisher verwendeten Mineralölentschäumer wird allerdings von den momentan alternativ verwendeten Fettalkoholentschäumern nicht erreicht.
Für denselben Entschäumungseffekt müssen wesentlich höhere Einsatzmengen verwendet werden, oder aber der erzielte Entschäumungseffekt ist so gering, daß bei wesentlich niedrigerer Maschinengeschwindigkeit produziert werden muß.
In der EP-A-0 040 882 wird eine wäßrige, flüssige Detergenszusammensetzung beschrieben, die 1-20% grenzflächenaktive Mittel, 0,5-10% Mono- oder Sequiterpen oder deren Gemische und 0,5-10% eines polaren Lösemittels enthält. Extensive Schaumbildung in der Zusammensetzung kann verhindert werden, wenn der Reinigungszusammensetzung eine spezielle Menge an Mono- oder Sesquiterpenen und ein polares Lösemittel mit speziellen Wasser-Löslichkeitseigenschaften zugegeben wird.

Ziel der Entwicklung war es, einen Entschäumer zu finden, der in seiner Wirksamkeit mit den Mineralölentschäumern gleichwertig oder sogar effektiver ist, der aber außerdem eine den behördlichen Auflagen gemäße genügend hohe biologische Abbaurate aufweist.

Überraschenderweise zeigte sich, daß Terpenkohlenwasserstoffe wie Citrusterpene bzw. Dipenten die Wirkung von Mineralölentschäumern nicht nur erreichen, sondern in manchen Fällen sogar übertreffen. Dieser Effekt ist umso erstaunlicher, als die gute
Entschäumerwirkung der Mineralölentschäumer und auch der Fettalkoholentschäumer auf die Anwesenheit langer CC-Ketten und der damit verbundenen starken Hydrophobie zurückgeführt wurde.

Erfindungsgemäß werden daher Entschäumer-Zusammensetzungen für wäßrige Systeme bereitgestellt, die einen oder mehrere Terpenkohlenwasserstoff(e), und 1-5 Gew-% Amidwachs enthalten.

Die Prüfung der biologischen Abbaubarkeit der auf Terpenkohlenwasserstoffen aufgebauten Entschäumer erfolgt aufgrund ihrer ungenügenden Wasserlöslichkeit nach der bekannten Tastmethode "CEG L-33-T-82, Biodegradability of Two-Stroke Cycle Outboard Engine Oils in Water". Als Ergebnis dieser Methode ergibt sich nach einem Testzeitraum von 7 Tagen eine Abbaurate von 88,7 % und nach 21 Tagen eine Abbaurate von 94,1 % (nach Beispiel 1). In ihrer Wirkung vergleichbare Mineralölentschäumer werden nach o.g. Testmethode nach 7 Tagen etwa zu 15-25 % und nach 21 Tagen zu 30-40 % biologisch abgebaut.

**Tabelle 1**

| Entschäumer | Mineralölentschäumer 1 | Mineralölentschäumer 2 | Entschäumer nach Beispiel 1 |
|---|---|---|---|
| biologische Abbaurate nach 7 Tagen in % * | 16 | 24 | 88 |
| biologische Abbaurate nach 21 Tagen in % * | 33 | 38 | 94 |

| | | | |
|---|---|---|---|
| * die Prozentzahlen wurden auf ganze Zahlen abgerundet ! | | | |

### Anwendungstechnische Prüfung:

### 1. Versuche mit Original-Siebwasser aus einer Papierfabrik (Schaumverursacher sind Harze und Harzabbauprodukte aus dem Holzschliff)

Eingesetzt werden je 0,5 g Entschäumer (Aktivsubstanz) auf 1 l Betriebswasser.

Testmethode: Das Siebwasser wird auf 50 °C erhitzt und anschließend 5 min. mit einem handelsüblichen elektrischen Handrührgerät bei höchster Drehzahl gerührt. Anschließend wird der Entschäumer zugegeben. Das Verhalten des Schaumes unmittelbar nach Zugabe des Entschäumers und die Schaumzerfallszeit werden registriert. Nach 30 sec. wird nochmals bei höchster Drehzahl 2 min. gerührt und der dabei entstehende Schaum beurtellt.

| | unmittelbar nach Entschäumerzugabe | nach 30 sec. | nach 2 min. |
|---|---|---|---|
| handelsüblicher Mineralentschäumer (Tebefom 6058®) | Zerfall nach 3 sec. | kein Schaum | kein Schaum |
| Entschäumer nach Beispiel 1 | Zerfall nach 1 sec. | kein Schaum | kein Schaum |
| Entschäumer auf Fettalkohol-Basis (Tebefom 6065®) | Zerfall nach 5 sec. | geringer Schaum | geringer Schaum |

### 2. Versuche mit Natrium-Cocoyl-Lauryloxethylatsulfat als typischer starkschäumender Emulgator in einer Textil-Färbe-Apparatur (Mathis-Jet)

Eingesetzt werden:
0,2 g/l Natrium-Cocoyl-Lauryloxethylatsulfat als Schaumverursacher,
0,5 g/l Entschäumer; es wird ein pH-Wert von 4 mit Hilfe von
0,3 g/l Ammoniumacetat und Essigsäure eingestellt.
- Schaumbeurteilung:: Schaumhöhe in cm,
Zerfallszeit nach Maschinenstillstand in sec.

| Temp. ( °C) | Entschäumer nach Beispiel 2 | | Tebefom 6058® (Mineralöl-Basis) | | Entschäumer OS® (Carbonsäure-Ester-Basis) | |
|---|---|---|---|---|---|---|
| | Schaumhöhe (cm) | Zerfallszeit (sec) | Schaumhöhe (cm) | Zerfallszeit (sec) | Schaumhöhe (cm) | Zerfallszeit (sec) |
| 30 | 0 | 0 | 0 | 0 | 0 | 0 |
| 40 | 0 | 0 | 0 | 0 | 2 | 5 |
| 50 | 0 | 0 | 0 | 0 | 3 | 20 |
| 60 | 0 | 0 | 1 | 1 | 3 | 25 |
| 70 | 0 | 0 | 3 | 5 | 4 | über 300 |

### 3. Versuche mit Natrium-Cocoyl-Lauryloxethylatsulfat als Schaumkomponente Schaumversuche auf dem Mathis-Jet

Eingesetzt werden:
0,2 g/l Cocoyl-Laurylalkoholoxethylat
0,5 g/l Entschäumer
Weichwasser unverändert
- Schaumbeurteilung:: Schaumhöhe in cm,
Zerfallszeit nach Maschinenstillstand in sec.

| Temp. ( °C) | Entschäumer nach Beispiel 2 | | Tebefom 6058® (Mineralöl-Basis) | | Entschäumer OS® (Carbonsäure-Ester-Basis) | |
|---|---|---|---|---|---|---|
| | Schaumhöhe (cm) | Zerfallszeit (sec) | Schaumhöhe (cm) | Zerfallszeit (sec) | Schaumhöhe (cm) | Zerfallszeit (sec) |
| 30 | 0 | 0 | 0 | 0 | 0 | 0 |
| 40 | 0 | 0 | 0 | 0 | 2 | 0 |
| 50 | 0 | 0 | 2 | 2 | 5 | 12 |
| 60 | 0 | 0 | 1 | 1 | 3 | 0 |
| 70 | 0 | 0 | 3 | 2 | 3 | über 300 |

### 4. Versuche mit Synprol 1315® oxethylat (15 EO) als Schaumkomponente Schaumversuche auf dem Mathis-Jet

Eingesetzt werden:
0,2 g/l Synprol 1315® oxethylat (15 EO)
0,5 g/l Entschäumer
Weichwasser unverändert
- Schaumbeurteilung:: Schaumhöhe in cm,
Zerfallszeit nach Maschinenstillstand in sec.

| Temp. ( °C) | Entschäumer nach Beispiel 2 | | Tebefom 6058® (Mineralöl-Basis) | | Entschäumer OS® (Carbonsäure-Ester-Basis) | |
|---|---|---|---|---|---|---|
| | Schaumhöhe (cm) | Zerfallszeit (sec) | Schaumhöhe (cm) | Zerfallszeit (sec) | Schaumhöhe (cm) | Zerfallszeit (sec) |
| 30 | 0 | 0 | 0 | 0 | 2 | 3 |
| 40 | 0 | 0 | 0 | 0 | 3 | 0 |
| 50 | 0 | 0 | 2 | 2 | 4 | über 300 |
| 60 | 0 | 0 | 2 | 0 | 5 | 0 |
| 70 | 0 | 0 | 3 | 3 | 5 | über 300 |

### 5. Versuche mit Cocoyl-Laurylalkoholoxethylat (12 EO) als Schaumkomponente Schaumversuche auf dem Mathis-Jet

Eingesetzt werden:
0,2 g/l Cocoyl-Laurylalkoholoxethylat (12 EO)
0,5 g/l Entschäumer
Weichwasser unverändert
- Schaumbeurteilung:: Schaumhöhe in cm,
Zerfallszeit nach Maschinenstillstand in sec.

| Temp. ( °C) | Entschäumer nach Beispiel 2 | | Tebefom 6058® (Mineralöl-Basis) | | Entschäumer OS® (Carbonsäure-Ester-Basis) | |
|---|---|---|---|---|---|---|
| | Schaumhöhe (cm) | Zerfallszeit (sec) | Schaumhöhe (cm) | Zerfallszeit (sec) | Schaumhöhe (cm) | Zerfallszeit (sec) |
| 30 | 0 | 0 | 0 | 0 | 2 | 2 |
| 40 | 0 | 0 | 0 | 0 | 3 | 0 |
| 50 | 0 | 0 | 2 | 2 | 3 | 130 |
| 60 | 0 | 0 | 3 | 0 | 4 | 0 |
| 70 | 0 | 0 | 3 | 2 | 6 | über 300 |

### Beispiele:

### Herstellung der Entschäumer

A. Eine Mischung aus 20 g 2-Ethylhexansäureisotridecylester, 3 g Amidwachs (Hoechst-Wachs C®), 3 g Talgfettalkohol.3 EO und 6 g Oleylalkohol.3 EO wurde auf 120 °C erhitzt.
   Die klare Mischung wurde langsam und unter heftigem Rühren in eine auf 50 °C erwärmte Mischung aus 64 g Dipenten und 4 g Stearinsäure.20 EO gegossen. Anschließend wurde unter Rühren auf Raumtemperatur abgekühlt. Dabei entsteht eine niedrigviskose, feine Amidwachs-Dipenten-Dispersion.
B. Eine Mischung aus 10 g 2-Ethylhexansäureneopentylglykolester, 3 g Amidwachs (Hoechst-Wachs C®), 2 g Talgfettalkohol.3 EO und 5 g Oleylalkohol.3 EO wurde auf 120 °C erhitzt.
   Die klare Mischung wurde langsam und unter heftigem Rühren in eine auf 50 °C erwärmte Mischung aus 76 g Dipenten und 4 g Stearinsäure.15 EO gegossen. Anschließend wurde unter Rühren auf Raumtemperatur abgekühlt. Es entstand dabei eine niedrigviskose, feine Amidwachs-Dipenten-Dispersion.

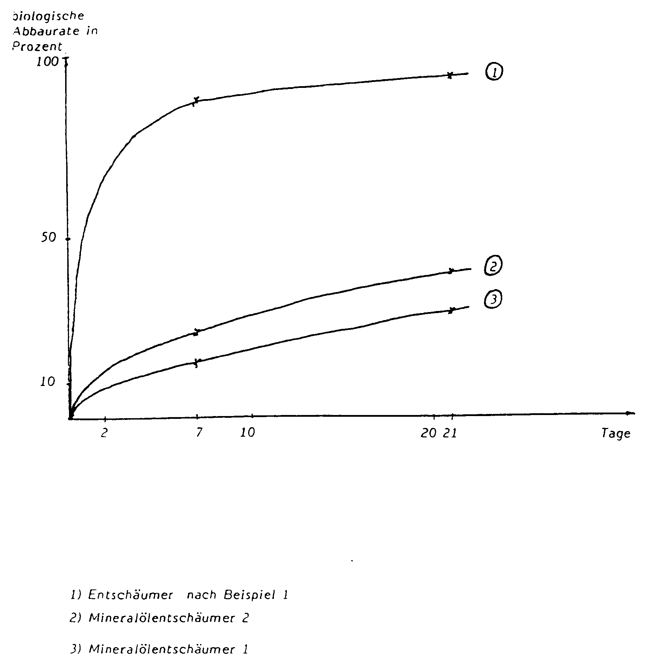

## Patentansprüche

1. Entschäumer-Zusammensetzung für wäßrige System, die einen oder mehrere Terpenkohlenwasserstoffe enthält, **dadurch gekennzeichnet**, daß sie 1-5 Gew.-% Amidwachs enthält.

2. Entschäumer-Zusammensetzung nach Anspruch 1, dadurch gekennzeichnet, daß der Terpenkohlenwasserstoff aus der aus Dipentenen bestehenden Gruppe ausgewählt ist.

3. Entschäumer-Zusammensetzung nach Anspruch 2, dadurch gekennzeichnet, daß es sich bei den Dipentenen um Citrusterpene oder technisches Dipenten handelt.

4. Entschäumer-Zusammensetzung nach einem der Ansprüche 1 bis 3, dadurch gekennzeichnet, daß sie 10-90 Gew.-% Terpenkohlenwasserstoff enthält.

5. Entschäumer-Zusammensetzung nach einem der Ansprüche 1 bis 4, dadurch gekennzeichnet, daß sie 1-10 Gew.-% nichtionogene Emulgatoren enthält.

6. Entschäumer-Zusammensetzung nach einem der Ansprüche 1 bis 5, dadurch gekennzeichnet, daß der Entschäumer 10-30 Gew.-% hydrophobe, hochverzweigte Carbonsäureester enthält.

7. Entschäumer-Zusammensetzung nach Anspruch 6, dadurch gekennzeichnet, daß die Carbonsäureester unter 2-Ethylhexansäureisodecylester und 2-Ethylhexansäureneopentylglykolester ausgewählt sind.

8. Verfahren zur Herstellung einer Entschäumerzusammensetzung, dadurch gekennzeichnet, daß eine Mischung aus 10g 2-Ethylhexansäureneopentylglykolester oder 20g 2-Ethylhexansäureisotridecylester, 3g Amidwachs, 2 oder 3g Talgfettalkohol·3EO und 5 oder 6g Oleylalkohol·3EO auf 120°C erhitzt wird, die Mischung langsam unter heftigem Rühren in eine auf 50°C erwärmte Mischung aus 64 oder 76g Dipenten und 4g Stearinsäure·15-20EO gegossen und unter Rühren auf Raumtemperatur abgekühlt wird.

9. Verwendung einer Entschäumerzusammensetzung nach einem der Ansprüche 1 bis 7 als biologisch leicht eliminierbarer Entschäumer in wäßrigen Systemen.

## Claims

1. Anti-foaming composition for aqueous systems which contains one or more terpene hydrocarbons, characterised in that it contains 1-5 wt.% amide wax.

2. Anti-foaming composition as claimed in Claim 1, characterised in that the terpene hydrocarbon is selected from the group comprising dipentenes.

3. Anti-foaming composition as claimed in Claim 2, characterised in that the dipentenes are citrus terpene or technical dipentene.

4. Anti-foaming composition as claimed in one of Claims 1 to 3, characterised in that it includes 10-90 wt.% terpene hydrocarbon.

5. Anti-foaming composition as claimed in one of Claims 1 to 4, characterised in that it contains 1-10 wt.% non-ion emulsifiers.

6. Anti-foaming composition as claimed in one of Claims 1 to 5, characterised in that the anti-foamer contains 10-30 wt.% hydrophobic, highly branched carbonic acid esters.

7. Anti-foaming composition as claimed in Claim 6, characterised in that the carbonic acid esters are selected from 2-ethylhexanoic acid isodecyl ester and 2-ethylhexanoic acid neopentyl glycol ester.

8. Method of manufacturing an anti-foaming composition, characterised in that a mixture of 10g 2-ethylhexanoic acid neopentyl glycol ester or 20g 2-ethylhexanoic acid isotridecyl ester, 3g amide wax, 2 or 3g tallow fat alcohol·3EO and 5 or 6g oleyl alcohol·3EO is heated to 120°C, the mixture is poured slowly whilst stirring vigorously into a mixture heated to 50°C of 64 or 76g dipentene and 4g stearic acid·15-20EO and is cooled whilst stirring to room temperature.

9. Use of an anti-foaming composition as claimed in one of Claims 1 to 7 as an easily biodegradable anti-foamer in aqueous systems.

## Revendications

1. Composition d'agent antimousse pour des systèmes aqueux contenant un ou plusieurs hydrocarbures de type terpène, caractérisée en ce qu'il contient 1,5 % en poids de cire amide.

2. Composition d'agent antimousse selon la revendication 1, caractérisée en ce que l'hydrocarbure de type terpène est sélectionné dans le groupe constitué des dipentènes.

3. Composition d'agent antimousse selon la revendication 2, caractérisée en ce qu'il s'agit, concernant les dipentènes de terpènes de citrus ou de dipentènes techniques.

4. Composition d'agent antimousse selon l'une des revendications 1 à 3, caractérisée en ce qu'elle contient de 10 à 90 % en poids d'hydrocarbure de type terpène.

5. Composition d'agent antimousse selon l'une des revendications 1 à 4, caractérisée en ce qu'elle contient de 1 à 10 % en poids d'émulsifiant non ionogène.

6. Composition d'agent antimousse selon l'une des revendications 1 à 5, caractérisée en ce que l'agent antimousse contient de 10 à 30 % en poids d'ester d'acide carbonique hydrophobe, fortement ramifié.

7. Composition d'agent antimousse selon la revendication 6, caractérisée en ce que l'ester d'acide carbonique est sélectionné parmi l'isodecylester d'acide 2-éthylhexane et le néopentylglycolester d'acide 2-éthylhexane.

8. Procédé de fabrication d'une composition d'agent antimousse, caractérisée en ce que l'on chauffe à 120 °C un mélange constitué de 10 g de néopentylglycolester d'acide 2-éthylhexane ou 20 g de isotridécylester d'acide 2-éthylhexane, 3 g de cire amide, 2 ou 3 g d'alcool de graisse de suie.3EO et 5 ou 6 g d'alcool oléylique.3EO, on coule le mélange lentement, avec un agitation intense dans un mélange, chauffé à 50 °C, constitué de 64 ou 76 g de dipentène et 4 g d'acide stéarinique-15-20EO et l'on refroidit en agitant jusqu'à la température ambiante.

9. Utilisation d'une composition d'agent antimousse selon l'une des revendications 1 à 7 comme agent antimousse pouvant être éliminé facilement biologiquement dans des systèmes aqueux.
